# EUROPEAN PATENT APPLICATION

(11) **EP 4 729 950 A1**
(43) Date of publication of application: **22.04.2026**
(21) Application number: 24206780.9
(22) Date of filing: 15.10.2024
(51) Int. Cl.: G01Q 30/14, G01Q 60/02, G01Q 60/38, G01Q 60/44, G01Q 70/10

(54) **IMAGING DEVICE AND METHOD FOR IMAGING A SURFACE TOPOGRAPHY OF A SAMPLE**

(71) Applicant: Nanosurf AG, 4410 Liestal (CH)
(72) Inventor: Papastavrou, Georg, 95447 Bayreuth (DE); Helfricht, Nicolas, 95447 Bayreuth (DE); Markus, Paul, 4410 Liestal (CH); Sittl, Sebastian, 95447 Bayreuth (DE)
(74) Representative: Dumlich, Heiko Alexander

(57) **Abstract**

The invention relates to an imaging device (100) for imaging a surface topography of a sample (116) in a fluid environment (112). The imaging device comprises a probe device (102) comprising an internal channel (106) extending through the probe device and comprising an outlet aperture (108), the probe device being configured and arranged for providing a fluid probe (110) at the outlet aperture, a micro fluidic pressure controller (114) that is configured for controlling the provision of the fluid probe at the outlet aperture of the probe device, an interaction sensor (118) that is configured for measuring an interaction value indicative of an interaction between the fluid probe provided at the outlet aperture of the probe device and a sample (116), and a surface topography determination unit (120) that is configured for determining a surface topography of the sample based on the measured interaction value.

## Description

### FIELD OF THE INVENTION

The present invention relates to an imaging device for imaging a surface topography of a sample in a fluid environment, in particular with nanometre resolution. Furthermore, the present invention relates to a method of fabricating an imaging device as well as to a method of operating an imaging device. The method also relates to a method of maintenance of an imaging device. Moreover, the present invention relates to a computer program for operating an imaging device and to a non-transitory computer readable data medium storing the computer program. The present invention can be particularly useful for imaging a surface topography of a sample with nanometre resolution in the field of solid state physics, semiconductor technology, molecular engineering, polymer chemistry and physics, surface chemistry, molecular biology, cell biology, medicine or the like.

### BACKGROUND OF THE INVENTION

With atomic force microscopy (AFM), it is possible to perform force measurements, topographic imaging with nanometre resolution, as well as manipulation of a sample. To this end, an AFM typically comprises a mechanical probe, e.g., a cantilever. For example, for topographic imaging, the mechanical probe is raster scanned over a sample. From the mechanical interaction of the mechanical probe with the surface of the sample, the surface topography of the sample can be derived. To achieve this, typically, the tip of the mechanical probe is brought into contact with the sample, and the sample is raster scanned along an x-y grid. Often, with an electronic feedback loop, the probe-sample force is kept constant during scanning. This feedback loop has the cantilever deflection as input, and its output controls the distance along the z-axis between a probe support and a sample support. Since the tip remains in contact with the sample while scanning in the x-y plane, height variations in the sample cause a deflection of the mechanical probe. With the feedback loop, the height of the mechanical probe is adjusted so that the deflection is restored to a predefined value. Typically, the feedback loop can adjust the support-sample separation continuously during the scanning motion such that the deflection remains approximately constant. Thereby, the feedback output approximately equals the sample surface topography so that a surface topography of the sample can be determined.

However, there is an ongoing demand to further improve high-resolution imaging capabilities, e.g., in terms of imaging resolution and/or their applicability to various different kinds of samples such as soft matter samples.

### SUMMARY OF THE INVENTION

The present invention is based on the objective of providing an improved imaging device. Furthermore, the present invention is based on the objective of providing an improved method of fabricating an imaging device. The present invention is also based on the objective of providing an improved method of operating an imaging device. Furthermore, the present invention is also based on the objective of providing an improved method of maintenance of an imaging device. Moreover, the present invention is based on the objective of providing an improved computer program for operating an imaging device and to a non-transitory computer readable data medium storing the computer program.

According to the present invention, an imaging device for imaging a surface topography of a sample in a fluid environment, in particular with nanometre resolution, is proposed. The imaging device comprises a probe device, a micro fluidic pressure controller, an interaction sensor and a surface topography determination unit. The probe device comprises an internal channel extending through the probe device and comprising an outlet aperture, wherein preferably, the internal channel extends between an inlet aperture and the outlet aperture. The outlet aperture may be arranged at a distal end of the probe device, e.g., at a probe tip of the probe device. The probe device is configured and arranged for providing a fluid probe at the outlet aperture. The micro fluidic pressure controller is configured for controlling the provision of the fluid probe at the outlet aperture of the probe device. The interaction sensor is configured for measuring, e.g., detecting or sensing, an interaction value indicative of an interaction between the fluid probe provided at the outlet aperture of the probe device and a sample. The surface topography determination unit is configured for determining a surface topography of a sample based on, e.g., using, the measured interaction value.

The present invention includes the recognition that AFM generally allows not only determining a sample topography, but also addresses mechanical and interfacial properties, such as elasticity and adhesion. AFM can also be performed on biological samples. However, the intrinsic softness of most biological materials, in combination with the damping of mechanical oscillations in liquid environment, often complicates the utilization of many AFM-imaging modes commonly used in material characterization.

With the imaging device according to the present invention, it may be possible to image a surface topography of a sample even in cases where known AFM devices cannot provide satisfactory results. For example, the imaging device according to the present invention may image a surface topography of a sample such as a biological sample in a fluid environment in a particularly reliable and efficient manner and with high resolution, e.g., that is comparable to the spatial resolution achieved with known AFM devices for non-biological samples.

The technique based on which the imaging device according to the present invention can image a surface topography of a sample is a non-contact technique that can be described as "fluidic force microscopy". That is, with an imaging device according to the present invention, no mechanical contact is necessary for determining a surface topography of a sample. Instead, the surface topography of a sample can be determined based on the detected interaction between the fluid probe and a sample. This is possible since with the probe device, a fluid probe can be provided that can be controlled with the micro fluidic pressure controller. The application of a pressure gradient or pressure difference along the internal channel creates a fluidic probe that can exit the outlet aperture with a flow rate between, for example, 0.001 atto litre per second and 1 pico litre per second, preferably between 1 atto litre per second and 1 pico litre per second.

The fluid probe may interact with a sample surface creating a measurable force. The interaction value may be indicative of such a measurable force. This interaction between the fluid probe and a sample can be detected with the interaction sensor so that the surface topography of a sample can be determined. Thereby, drawbacks of known AFM devices in particular when imaging samples with intrinsic softness such as most biological materials can be overcome.

Thus, the imaging device according to the present invention opens the path for various new application fields that cannot be accessed with known AFM devices, in particular the study of biological systems. Fluidic force microscopy can be considered as to combine nano-fluidics and AFM by means of a micro-channelled probe device, i.e., the probe device with an internal channel comprising an outlet aperture at its one end. The probe device of the imaging device can be used for determining a surface topography of a sample in a fluid environment in a non-contact mode that is not based on the mechanical contact of solid interfaces or surface forces as most other AFM imaging modes but relies solely on hydrodynamic interactions. That is, based on the interaction value indicative of an interaction between the fluid probe and the sample, it is possible to image not only standard samples, such as calibration gratings or collagen fibrils, but even resolving individual macromolecules may be possible.

Herein, the probe device can be a micromechanical sensor such as a cantilever probe, or membrane probe or the like. A micromechanical sensor is configured to translate a force into a mechanical motion, e.g., bending of the cantilever or change of resonance frequency or the like. This mechanical motion of the micromechanical sensor may be indicative of an interaction between the fluid probe and the sample and can be measured as an interaction value indicative thereof with the interaction sensor. The measured interaction value can be converted into, e.g., an optical signal or an electrical signal with the interaction sensor. For example, the probe device may be a fluid force microscopy probe, a general purpose micro- or nano-pipette, e.g., in lever-configuration, a tuning fork pipette, a self-sensing pipette probe or the like. The probe device preferably has a probe tip arranged at a distal end of the probe device, wherein the internal channel extends through the probe tip. The probe tip may have the outlet aperture arranged at its distal end. The internal channel may be configured or considered as a micro fluidic device.

In the imaging device, the interaction sensor may be configured to measure an interaction value indicative of a deflection of the probe device or a sample holder and to provide a corresponding interaction sensor readout, e.g., representing the measured interaction value. The deflection may be caused by the interaction between the fluid probe and a sample. In particular, the interaction sensor may be configured for measuring an interaction value indicative of an interaction between the fluid probe provided at the outlet aperture of the probe device and a sample based on one or more of an optical lever method, e.g., optical lever method as known from standard AFM devices, interferometric deflection detection, self-sensing, tuning-fork probes or the like and to provide a corresponding sensor readout. In particular, the interaction value may be indicative of an interaction between fluid probe and sample resulting in a static force, dynamic force damping, a force gradient or the like.

The interaction sensor can be part of an actuator-sensor block wherein the actuator can be a photothermal actuator, a piezoelectric actuator, a capacitive actuator or the like and the detector can be configured for detecting the interaction value using an optical-lever method (OLM), interferometry, capacitive sensing, or tuning fork sensing.

In case the probe device is or comprises a membrane probe, the interaction sensor may be configured to measure an interaction value using one or more membrane detection methods, e.g., based on electret-microphone-like or other electromechanical transducers, micro-electromechanical systems (MEMS), nanoelectromechanical systems (NEMS) or the like.

In case the probe device is a membrane probe, the membrane probe can be or can comprise a membrane made of or which may comprise 3D materials such as Si, SiN, SiO, or the like and/or 2D materials such as hBN, graphene, MoS₂ or the like. Typical thicknesses of the membrane probe may be in the order of 100 nm to one or more micrometer such as up to 10 micrometers. The membrane probe may comprise a probe tip arranged on a membrane surface that is configured to face a sample. The probe tip of the membrane probe may comprise the internal channel and the outlet aperture for providing the fluid probe.

The interaction sensor can be attached to the probe device or can be separate to the probe device. It is possible that the interaction sensor is a sample holder or can be attached to a sample holder. For example, the probe device can be a cantilever probe with a cantilever and a probe tip or can be a membrane probe with a membrane and a probe tip or the like and the interaction sensor can be attached to the cantilever probe or to the membrane probe. The interaction value may be indicative of an interaction between the fluid probe provided at the outlet aperture of the probe device and a sample that may cause a deflection, oscillation or the like of the cantilever of a cantilever probe or the membrane of a membrane probe caused by the fluid probe interacting, e.g., impinging onto a sample. In case the interaction sensor at the same time acts as a sample holder so that the sample is arranged on the interaction sensor or in case the interaction sensor is attached to a sample holder, the interaction sensor may measure an interaction value indicative of an interaction between the fluid probe and a sample, e.g., from a force or pressure caused by an impinging fluid jet or by a fluid suction stream acting on the sample holder. Generally, an interaction value can be indicative of an interaction between the fluid probe and a sample that may comprise a recoil force, suction, an induced oscillation, e.g., of the probe device or a sample holder, or an induced bending, e.g., of the probe device or a sample holder.

Herein, a micro fluidic pressure controller may comprise a fluid reservoir, e.g., with pressurized air or other gases or pure water or other liquids. The micro fluidic pressure controller may be connected to the internal channel via a proportional valve such as a proportional valve for gaseous environments. In general, the micro fluidic pressure controller can be a microfluidic flow controller system for fluidic environments. Preferably, the micro fluidic pressure controller is configured to enable hydrostatic pressure control, e.g., by elevation of a fluid reservoir, e.g., to enable gravitational flow.

The micro fluidic pressure controller can be configured for controlling a pressure difference between, e.g., the internal channel and the environment and/or between an inlet aperture and the outlet aperture of the internal channel so that a fluid probe is either ejected from the outlet aperture onto a sample as a fluid jet or so that a fluid suction stream is acting on a sample. A pressure difference may include a higher pressure at the inlet aperture and a lower pressure at the outlet aperture so that a fluid is sucked into the internal channel at the inlet aperture resulting in an ejection of a fluid probe as a fluid jet from the outlet aperture. *Vice versa,* a pressure difference may include the opposite case, i.e., with a lower pressure at the inlet aperture and a higher pressure at the outlet aperture, so that the fluid is sucked into the outlet aperture as a fluid suction stream, resulting in an influx of fluid into the outlet aperture.

For example, the fluid probe can be a fluid jet or a fluid suction stream that interacts with a sample. In case of a fluid jet, the interaction between the fluid probe and a sample may be repulsive. A fluid jet is thus a positive flow through the internal channel of the probe device, i.e. a flow through the internal channel and out of the outlet aperture. In case of a fluid suction stream, the interaction between the fluid probe and a sample may be attractive. A fluid suction stream is thus a negative flow through the internal channel of the probe device, i.e. a flow through the outlet aperture and into the internal channel. A fluid suction stream through the outlet aperture may be used to detect a proximity of a sample.

In both cases, a force may be exerted on the probe device, yet with opposite directions. That is, in case of a repulsive interaction, a recoil force may be generated that is directed towards the source, e.g., probe device. If an attractive interaction is present due to fluid suction stream, a suction force may be generated that is directed towards the sample, e.g., pointing away from the probe device. Both, a fluid jet and a fluid suction stream may be generated by application of a pressure gradient in the internal channel of the probe device. The pressure gradient may be controlled with the micro fluidic pressure controller.

It is possible that the fluid probe is a liquid probe. Preferably, a liquid probe is used together with a liquid environment for the sample. The liquid probe may be or may comprise one or more of pure water, chemical buffer or electrolyte, ionic liquid, or organic solvents or the like.

Alternatively, it is also possible that the fluid probe is a gas probe. Preferably, a gas probe is used together with a gaseous environment for the sample. In case of a gaseous probe, the gaseous probe may be or may comprise one or more of pressurized air, dry air, nitrogen, or inert gases like argon or the like.

A fluid environment can be a liquid or gaseous environment. The fluid environment can be or can comprise one or more of the fluids as indicated for the liquid and gaseous probes above.

The imaging device can comprise an optional sample holder that is configured for holding a sample in a fluid environment. For example, a sample holder may be configured as a hydrophilic or hydrophobic support, e.g., to aqueous and non-aqueous environments, respectively, an O-ring with O-ring holder to contain the fluid in a defined volume and location, and petridish, or a plate as commonly used on biological assays.

Herein, a surface topography determination unit may be an AFM-controller, e.g., as known from common AFM devices. For example, the surface topography determination unit may comprise one or more of a deflection detection unit for measuring a deflection of the probe device or a sample holder, a phase-locked loop (PLL), a proportional-integral-derivative (PID), a scanning-engine, or the like.

Nanometre resolution can be defined by the size of the outlet aperture that defines the resolution. A lower limit of the resolution can be of the order of 1 nm and an upper limit of the resolution can be of the order of 1 micrometer. The resolution may be tuned by the size of the aperture, by the flow rate of the fluid probe, which may be governed by the pressure difference between the internal channel and the environment as controlled by the micro fluidic pressure controller. The resolution may also be tuned by one or more of the dimensions and geometry of the probe device, which define the force or force gradient, noise floor, and by the proximity of the outlet aperture to a sample. The resolution may refer to in-plane ("horizontal") and/or out-of-plane ("vertical"/"height") resolution, e.g., with respect to a sample surface. The out-of-plane resolution on a flat surface could be relatively independent on the aperture size, and may more strongly depend on other factors such as a flow rate of the fluid probe. The in-plane resolution instead may rather depend on the aperture size and/or proximity to a sample, as these define the surface area of the sample that is experiencing the fluid probe. Preferably, a size of the outlet aperture is between 1 nm and 1 micrometer, e.g., of 3 nm to 1 micrometer, preferably, of 100 nm to 500 nm, in order to achieve a resolution of the order of sub-nm, e.g., of the order of 0.1 nm to 1 micrometer.

For example, there may be a higher pressure reservoir fluidly connected to the inlet aperture and the micro fluidic pressure controller may control the pressure in the higher pressure reservoir so that a fluid probe at a predefined pressure is ejected as a fluid jet from the outlet aperture. The pressure in the higher pressure reservoir may be controlled to be higher than a pressure at the outlet aperture.

It is also possible that there is a lower pressure reservoir fluidly connected to the outlet aperture and the pressure of in the lower pressure reservoir can be controlled with the micro fluidic pressure controller so that a fluid probe at a predefined pressure is ejected as a fluid jet from the outlet aperture. The pressure in the lower pressure reservoir may be controlled to be lower than a pressure at the inlet aperture.

It is also possible that there is a higher pressure reservoir fluidly connected to the outlet aperture and the micro fluidic pressure controller may control the pressure in the higher pressure reservoir so that a fluid probe at a predefined pressure is sucked in as a suction fluid stream into the outlet aperture. The pressure in the higher pressure reservoir may be controlled to be higher than a pressure at the inlet aperture.

It is also possible that there is a lower pressure reservoir fluidly connected to the inlet aperture and the pressure in the lower pressure reservoir can be controlled with the micro fluidic pressure controller so that a fluid probe at a predefined pressure is sucked in as a suction fluid stream into the inlet aperture. The pressure in the lower pressure reservoir may be controlled to be lower than a pressure at the outlet aperture.

In case the imaging device comprises a lower pressure reservoir, a sample may be arranged within the lower pressure reservoir. In case the imaging device comprises a higher pressure reservoir, a sample may be arranged within the higher pressure reservoir. Generally, it is desired that with the micro fluidic pressure controller it is possible to control a fluid reservoir for achieving a pressure difference between the inlet aperture to the outlet aperture and/or between the internal channel and the environment, e.g., the fluid environment, to ensure that pressure in the internal channel is different from the environment.

It is also possible that the imaging device comprises a higher pressure reservoir fluidly connected to an inlet aperture and a lower pressure reservoir fluidly connected to the outlet aperture at the same time or *vice versa.* Both, the higher pressure reservoir and the lower pressure reservoir can be controlled by the micro fluidic pressure controller so that a pressure at the inlet aperture is higher than a pressure at the outlet aperture or *vice versa.* As a result, a fluid probe at a predefined pressure can be either ejected from the outlet aperture as fluid jet or can be sucked into the outlet aperture as a suction fluid stream.

Preferably, a pressure difference between the inlet aperture and the outlet aperture and/or between the internal channel and the environment such as the fluid environment is between 1 mbar up to 10 bar, preferably, between 10 mbar to 10 bar. When setting up the imaging device, a pressure difference of, e.g., 0 bar can be employed. Generally, a fluid jet or a suction fluid stream at the outlet aperture may depend on the pressure differences multiplied by the outlet aperture area.

For example, with the imaging device a 1 bar pressure difference and an outlet aperture size of 10 nm to 100 nm may be achieved. Thereby, a force due to the sample proximity of the order of nano Newton may be realised.

A recoil of the fluid probe may result in a recoil force that is exerted on the probe device, in particular when the fluid probe impinges on a sample. A recoil of the fluid probe may also be determined from an impinging force that is exerted on the sample holder, in particular when the fluid probe impinges on a sample. For example, if the sample is arranged on a sample holder that includes an interaction sensor to detect forces exerted on the sample. In that case, the probe device would not need to have an interaction sensor, and the feedback would work based on the interaction detected by the interaction sensor supporting the sample. For example, the interaction sensor may be a pressure sensor such as a piezoelectric sensor that is configured for detecting a recoil force associated with the fluid probe. For example, the interaction sensor may be configured to provide an interaction sensor readout that is indicative of the detected interaction between the fluid probe and a sample such as a recoil of the fluid probe.

Alternatively, or in addition, the interaction sensor can measure an interaction value indicative of a recoil based on a measured force derived from a bending of the probe device or sample holder that can be static or dynamic. The bending is considered static if changes in this bending are predominantly due to the force to be detected. The bending is considered dynamic if the probe device or sample holder is actuated to result in dynamic bending also in the absence of to-be-measured interactions, and changes in this dynamic behaviour, e.g., changes in amplitudes and phases, of the probe device or sample holder provide a measure of the force or force gradient due to proximity of the sample.

Preferably, the interaction sensor is arranged at, e.g. mounted on, or part of the probe device or *vice versa.* Alternatively, the interaction sensor is a sample holder or part thereof that is configured for holding a sample in a fluid environment. The interaction sensor may also be arranged at the sample holder. It is also possible that there are two or more interaction sensors in the imaging device, e.g., a first interaction sensor arranged at the probe device and a further interaction sensor arranged at a sample holder. For example, the probe device is configured as a cantilever probe or a membrane probe. Preferably, a nominal spring constant of the cantilever probe is between 0.01 N/m and 100 N/m.

In the imaging device, it is preferred that there is a raster scanning unit that is configured for raster scanning an area of a sample with the probe device. For example, the raster scanning unit may be configured for controlling an imaging mode that is referred to herein as "liquid probe force microscopy" (LPFM). LPFM is a true non-contact mode that is not based on the mechanical contact of solid interfaces or surface forces as most other AFM imaging modes but relies solely on hydrodynamic interactions. In terms of applications, with LPFM, a non-contact scanning mode for imaging a surface topography, e.g., of a living cell and/or tissue in a solution can be realised. It is also possible to use LPFM to have a non-contact yet nanometre resolution tool for determining critical dimensions in semiconductor devices, for example.

Preferably, the raster scanning unit comprises a feedback loop that is configured to receive an interaction sensor readout, such as a measured interaction value indicative of a probe device's static deflection, a dynamic oscillation amplitude or a resonance frequency shift, as input and for providing a distance control signal as output that is configured for controlling a distance between a sample and the probe device so that when raster scanning a sample, a probe device-sample force is essentially constant in average. For example, the raster scanning unit may be configured for controlling a probe device-sample force or force gradient based on measured output of feedback.

It is possible that the probe device may be a cantilever probe containing a fluid reservoir arranged at, e.g., fluidly connected to, the one end of the cantilever and an outlet aperture at the tip at the opposite end. Thereby, it is possible to enable AFM imaging, tracing the surface of a sample by keeping the recoil, preferably on average, approximately constant while raster scanning the tip over a sample. The attractiveness of this solution is that it may provide a nanometre-scale topographic mapping with resolution comparable or similar to standard contact-mode AFM, yet, without contact between the probe device and a sample surface: Thereby it may be possible to overcome one of the key limitations of known AFM by avoiding such a hard contact and reducing the risk of probe or sample degradation, while still yielding high resolution topographic mappings.

The imaging device can be operated with various different scanning modes. Possible scanning modes can be based on so-called static or contact mode imaging, tracing surface contours at an approximately constant force or on dynamic modes, where the probe device is actuated at resonance or off-resonance, and where feedback is based on changes in amplitude, phase, damping or resonance frequency, or maximum force as detected via the dynamic behaviour of the probe device. This can also include modes where the probe device is actuated at more than one frequency at the same time.

The imaging device may comprise a resonance frequency excitation device that is arranged and configured for exciting a probe device resonance frequency of the probe device. The interaction sensor preferably is configured to detect the recoil of the probe device based on a measured force gradient derived from a shift of a resonance frequency of the probe device. In such a case, the resonance frequency may be detected by a PLL, which acts to keep the phase as a pre-set value by shifting the frequency at which the probe device is actuated. For example, it is possible to shake, excite or actuate the probe device, which then senses a force gradient by shifts in an excitation frequency at which the probe device resonates. Alternatively, or in addition to a recoil force, the impact of a fluid jet or a fluid suction stream acting on a sample surface may lead to an additional, distance-dependent force contribution. The distance dependence can be utilized for topographic feedback to image surfaces based on the frequency modulation of the probe device's resonance, e.g., enabled by photothermal excitation.

The resonance frequency excitation device may comprise a piezo actuator, magnetic actuator, photothermal excitation laser or the like. The resonance frequency excitation device can be arranged, for example, on the interaction sensor, on the probe device or on a holder of the interaction sensor or of the probe device. Preferably, when the fluid environment is a liquid environment, photothermal excitation is preferred over commonly used piezo-actuation, since it is possible to thereby only drive the resonance of the probe device and not of other parts in the experimental setup. With a piezo actuator such as a shake piezo it is possible to induce an oscillation of probe device. The resonance frequency excitation device can comprise a PLL for controlling the excitation frequency and for tracking the probe device's resonance, which can provide the signal for PID-feedback of the imaging device and thus controls the z-piezo movement. The z-piezo movement may refer to the movement of probe tip or a sample, as long as it controls the relative positions of the tip and sample, so tip-sample distance. That is, one of the probe tip and the sample may be kept stationary whereas the respective other member is moved.

It is particularly preferred that the resonance frequency excitation device is or comprises a photothermal excitation laser. The photothermal excitation laser may be configured as a laser excitation of 400 nm to 1600 nm wavelengths. For example, about 785 nm wavelength for the excitation, and an 840 nm wavelength for the light source to detect the deflection are suitable since they are biocompatible and non-interfering with biological samples, even facilitating concurrent fluorescence imaging for comprehensive analysis. The imaging device may comprise a lock-in amplifier such as an external lock-in amplifier, with PLL configured for controlling an excitation frequency and amplitude of the photothermal excitation laser.

The interaction sensor may comprise a readout device that is arranged and configured for determining a deflection of the probe device. The readout device can be a readout laser or any other readout tool known for AFM devices. It is also possible that the readout device comprises a tuning-fork, a self-sensing probe, an electromechanical transducer system, MEMS, NEMS or the like. Specific alternatives to the readout laser are micromechanical readout devices based on strain gauges or changes in sensor capacitance instead of optical readout. For example, an optical readout laser can be configured to readout the probe device by an optical beam deflection as detected on a position sensitive detector, or by detecting interference between light reflected from the probe device and light reflected from a reference surface. Additionally or alternatively, the deflection-readout of the photodiode can be used as the input signal for an external lock-in amplifier whose output can be used to modulate the photothermal excitation laser.

It is possible that the imaging device comprises a first electrode that is placed in a fluid reservoir fluidly connected to an inlet aperture of the internal channel, e.g., the inlet aperture being arranged at a proximal end of the probe device, and a second electrode that is placed at a sample holder configured for holding a sample so that scanning ion conductance microscopy (SICM) can be performed on a sample. When using two or more electrodes in the imaging device, it is possible to perform one or more of SICM, electrochemistry, and/or electro kinetics with the imaging device in addition to fluid force microscopy. For example, it is also possible to measure a current between the electrodes for SICM, to maintain the fluid environment at a given electrochemical potential for electrochemistry, or for generating an electro kinetic electro osmose, electrophoresis, streaming potential or streaming current for electro kinetics.

SICM is a non-contact mode, which is based on the distance dependence of ion currents rather than surface forces. For example, SICM can be performed by measuring the ion current between a first electrode in the fluid reservoir and the second electrode either placed at a sample holder, e.g., in solution, or directly attached to the sample. Alternatively, for an electro-chemical characterisation, a configuration of, e.g., two, three, four or more electrodes can be used to detect ion currents as a function of a bias voltage applied between electrodes, thereby measuring the electrochemical properties of the sample surface. In the same configuration, sample-properties can be studied via electro-kinetic characterization. This refers to any characterization, based on the measurement of streaming potentials or streaming currents. Also, electrophoretic or electro-osmotic effects might be used for tuning local potentials. Optionally, the imaging device may comprise a patch-clamp amplifier or another electrometer that is arranged and configured for measuring a current between the first and second electrodes. LPFM and SICM can be combined and used simultaneously. In this case, the ion current may not be used for z-feedback but may be captured as an additional signal while imaging by LPFM. Since LPFM contours the sample topography, the ion current is determined at a constant separation distance, which would allow to disentangle surface charge distribution and topography. For example, a current signal may reveal a contrast that is not related to the height image and, which is in line with the complex, hierarchical structure of collagen fibrils. The detection of an ionic current, independent of the sample topography, can be verified by reversal of the externally applied potential.

According to the present invention also a method of fabricating an imaging device is proposed. The method comprises the steps of:
- providing, e.g., mounting, a probe device, the probe device comprising an internal channel extending through the probe device and comprising an outlet aperture, so that the probe device is configured and arranged for providing a fluid probe,
- providing, e.g., installing, a micro fluidic pressure controller so that provision of the fluid probe at the outlet aperture of the probe device can be controlled with the micro fluidic pressure controller,
- providing, e.g., mounting, an interaction sensor so that an interaction value that is indicative of an interaction between the fluid probe provided at the outlet aperture of the probe device and a sample can be measured with the interaction sensor, and
- providing, e.g., installing, a surface topography determination unit so that a surface topography of a sample can be determined based on the measured interaction value with the surface topography determination unit.

The method of fabricating an imaging device can be used for fabricating the image device as described herein.

Furthermore, according to the present invention, a method of operating an imaging device is proposed. The method comprises the steps of:
- arranging a probe device comprising an internal channel extending through the probe device and comprising an outlet aperture, the probe device being configured for providing a fluid probe at the outlet aperture,
- controlling the provision of the fluid probe at the outlet aperture of the probe device with a micro fluidic pressure controller,
- measuring an interaction value indicative of an interaction between the fluid probe provided at the outlet aperture of the probe device and a sample with an interaction sensor, and
- determining a surface topography of a sample based on the measured interaction value using a surface topography determination unit.

The method of operating an imaging device can be used for operating the imaging device as described herein.

Moreover, according to the present invention, a method of maintenance of an imaging device is proposed. The method of maintenance of an imaging device comprises repairing or replacing one or more of:
- a probe device comprising an internal channel extending through the probe device and comprising an outlet aperture, the probe device being configured and arranged for providing a fluid probe at the outlet aperture,
- a micro fluidic pressure controller that is configured for controlling the provision of the fluid probe at the outlet aperture of the probe device,
- an interaction sensor that is configured for measuring an interaction value indicative of an interaction between the fluid probe provided at the outlet aperture of the probe device and a sample, and
- a surface topography determination unit that is configured for determining a surface topography of the sample based on the measured interaction value.

For example, with the method of maintenance of an imaging device, clogging of the internal channel in the outlet aperture or any other micro fluidic component of the imaging device can be removed. With the method of maintenance of an imaging device, the imaging device as described herein or at least parts of it can be repaired or replaced.

According to the present invention, also a computer program for operating an imaging device is proposed. The computer program includes instructions for executing the steps of the method of operating an imaging device as described herein, when run on a computer. The present invention also comprises a non-transitory computer readable data medium storing the computer program described herein.

It shall be understood that the aspects described above, and specifically the imaging device of claim 1, the method of fabricating an imaging device of claim 11, the method of operating an imaging device of claim 12, the method of maintenance of an imaging device of claim 13 and the computer program of claim 14, have similar and/or identical preferred embodiments, in particular as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

- Fig. 1: schematically and exemplary shows in Fig. 1a an imaging device for imaging a surface topography of a sample in a fluid environment that has a probe device configured as a cantilever probe with a cantilever and a probe tip and in Fig. 1b an imaging device at has a probe device configured as a membrane probe with a membrane and a probe tip;
- Fig. 2: schematically and exemplary shows a flowchart diagram representing a method of fabricating an imaging device for imaging a surface topography of a sample in a fluid environment;
- Fig. 3: schematically and exemplary shows a flowchart diagram representing a method of operating an imaging device for imaging a surface topography of a sample in a fluid environment;
- Fig. 4: schematically and exemplary shows in Figs. 4a to 4c an imaging device that has an AFM controller and scan head as well as a photothermal excitation laser, a readout laser and that is equipped with electrodes for performing scanning ion conductance microscopy;
- Fig. 5: shows a photograph of an imaging device that is configured in accordance with the imaging device described with reference to Fig. 4;
- Fig. 6: shows in Figs. 6a to 6d a detailed view of the AFM-head and other components of the imaging device described with reference to Fig. 5;
- Fig. 7: shows in Figs. 7a and 7b a detailed view of a micro fluidic connector that is used in the imaging device described with reference to Fig. 5;
- Fig. 8: shows in Figs. 8a to 8g different details of physical principles of LPFM;
- Fig. 9: shows in Figs. 9a to 9e a model of a micro-channelled cantilever;
- Fig. 10: shows in Figs. 10a to 10d, a visualization of a mesh-grid utilized for the simulation of the liquid flow through a micro-channelled cantilever when it is placed far away from a surface;
- Fig. 11: shows in Figs. 11a and 11b pressure profiles as obtained by the Comsol multiphysics simulations for a micro-channelled cantilever;
- Fig. 12: shows the results of a study of a dependence of a recoil force on external pressure for small apertures;
- Fig. 13: shows a calibration curve for a determination of an optical lever sensitivity;
- Fig. 14: shows the results of a study of a distance dependence of SICM current;
- Fig. 15: shows in Figs. 15a to 15j a comparison of LPFM to other AFM-imaging modes;
- Fig. 16: shows in Figs. 16a to 16h results of studies of imaging of soft matter by LPFM;
- Fig. 17: shows the results of a study of a height distribution for PAMAM dendrimers adsorbed onto mica;
- Fig. 18: shows the results of a study of simultaneous acquisition of ionic current and topography in LPFM;
- Fig. 19: shows in Figs. 19a to 19e the results of a study of current signal in LPFM upon reversal of applied potential; and
- Fig. 20: shows in Figs. 20a to 20c the results of a study of a deformation of a soft surface due to the impinging jet.

### DETAILED DESCRIPTION OF EMBODIMENTS

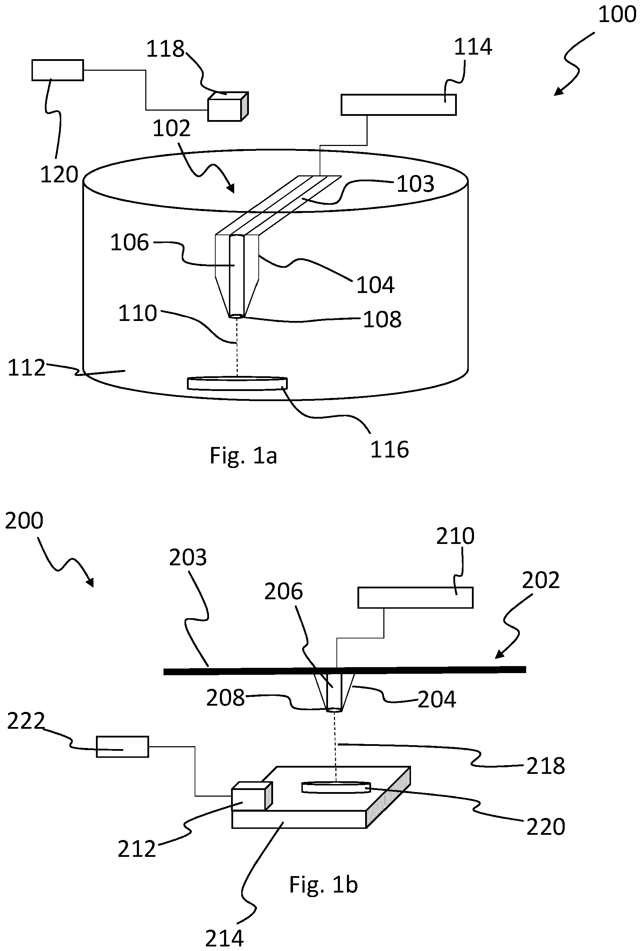

Fig. 1 schematically and exemplary shows in Fig. 1a an imaging device 100 for imaging a surface topography of a sample 116 in a fluid environment 112 that has a probe device 102 configured as a cantilever probe with a cantilever 103 and a probe tip 104. In particular, the probe device 102 acts as a micromechanical sensor. The probe device 102 has an internal channel 106 that extends through the probe tip 104 and ends in an outlet aperture 108 arranged at the apex of the probe tip 104. The diameter of the outlet aperture 108 can be 300 nm or less. With the probe device 102 it is possible to provide a fluid probe 110 at the outlet aperture 108. The fluid probe can be a fluid jet or a fluid suction stream depending on the pressure difference between the outlet aperture 108 and the environment such as the fluid environment 112. For controlling the pressure difference and thus the direction of the fluid probe 110, the imaging device 100 comprises a micro fluidic pressure controller 114 that is thus configured for controlling the provision of the fluid probe 110 at the outlet aperture 108 of the probe device 102. In particular, the micro fluidic pressure controller 114 is fluidly connected to the internal channel 106 for controlling the pressure difference between the outlet aperture 108 and the environment, here the fluid environment 112, and for controlling the direction of the fluid probe 110. When the fluid probe 110 interacts with the sample 116, it is possible to detect this interaction between the fluid probe 110 provided at the outlet aperture 108 of the probe device 102 and a sample 116. To this end, the imaging device 100 comprises an interaction sensor 118 that is arranged to measure an interaction value indicative of an interaction between the fluid probe 110 and the sample 116. In the imaging device 100, the interaction sensor 118 is arranged separate from the probe device 102. Yet, alternatively, the interaction sensor 118 may be arranged at the probe device 102, e.g. mounted, at the probe device 102 but may also be arranged at an optional sample holder that holds the sample 116.

The interaction sensor 118 may be configured in various ways. For example, interaction sensor 118 may comprise a readout laser and a photodiode for detecting a laser beam of the readout laser that is reflected from the probe device 102 acting as a micromechanical sensor which translates a force into a mechanical motion. Generally, it is possible that the interaction sensor 118 can comprise an actuator such as a photothermal actuator, a piezoelectric actuator, or a capacitive actuator and a detector that is configured for detecting the interaction value, e.g., using an OLM, interferometry, capacitive sensing, or tuning fork sensing.

That is, with the interaction sensor 118, it may be possible to detect an oscillation of the probe device 102 that is indicative of the interaction between the fluid probe 110 and the sample 116, e.g., a change of its resonance frequency. It may also be possible to detect a deflection or bending of the probe device 102 with the interaction sensor 118 that is indicative of the interaction between the fluid probe 110 and the sample 116. A sensor readout of the interaction sensor 118 may be evaluated by a surface topography determination unit 120 of the imaging device 100. The surface topography determination unit 120 can then determine a surface topography of the sample 116 based on the sensor readout and thus the detected interaction between the fluid probe 110 and a sample 116.

The imaging device 200 shown in Fig. 1b is configured similar to the imaging device 100 described with reference to Fig. 1a. However, instead of a cantilever probe, imaging device 200 comprises a membrane probe 202 that implements the probe device. Attached to a membrane 203 of the membrane probe 202 there is a probe tip 204 with an internal channel 206 and an outlet aperture 208 as described for the probe tip 104 of imaging device 100. The imaging device 200 also comprises a micro fluidic pressure controller 210 that is configured the same way as micro fluidic pressure controller 114 of imaging device 100. Imaging device 200 also comprises an interaction sensor 212 that, in contrast to interaction sensor 118 of imaging device 100, is arranged at a sample holder 214. The interaction sensor 212 may also detect an interaction between the fluid probe 218 provided at the outlet aperture 208 and the sample 220. A sensor readout of interaction sensor 212 may then be used by a surface topography determination unit 222 for imaging a surface topography of the sample 222 the same way as surface topography determination unit 120 of imaging device 100 for determining a surface topography of the sample 220 based on the sensor readout of interaction sensor 212.

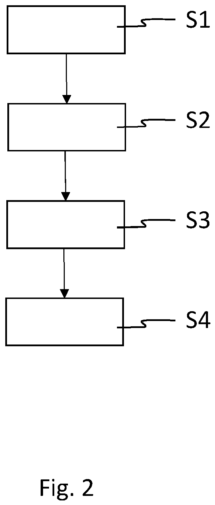

Fig. 2 schematically and exemplary shows a flowchart diagram representing a method of fabricating an imaging device. The method of fabricating an imaging device can be used for fabricating, for example, any of the imaging devices described with reference to the Figures such as imaging device 100, imaging device 200, imaging device 400 and imaging device 500. In the method, a probe device is provided, e.g., mounted at or installed to a holder (step S1). The probe device comprises an internal channel extending through the probe device and an outlet aperture. The probe device is configured and arranged for providing a fluid probe. The probe device may be, e.g., a cantilever probe or a membrane probe. Subsequently, a micro fluidic pressure controller is provided, e.g., installed in the imaging device and connected to the probe device, (step S2) so that provision of the fluid probe at the outlet aperture of the probe device can be controlled with the micro fluidic pressure controller. The fluid probe may be a fluid jet or a fluid suction stream depending on the control of a pressure difference at the outlet aperture with the micro fluidic pressure controller. The fluid probe may be a liquid fluid probe or a gas fluid probe. An interaction sensor is provided, for example mounted (step S3), e.g., to the probe device or an optional sample holder, so that an interaction between the fluid probe provided at the outlet aperture of the probe device and a sample can be detected with the interaction sensor. Furthermore, a surface topography determination unit is provided, e.g., installed in the imaging device (step S4). In particular, the surface topography determination unit is installed so that a surface topography of a sample based on the detected interaction between the fluid probe and a sample can be determined with the surface topography determination unit. Further embodiments of the method may include further steps, e.g., for providing further parts of the imaging devices described herein.

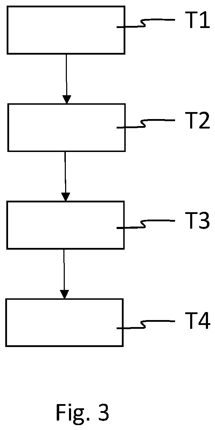

Fig. 3 schematically and exemplary shows a flowchart diagram representing a method of operating an imaging device such as any of the imaging devices described herein. In particular, the method of operating an imaging device can be used for imaging a surface topography of a sample in a fluid environment with any of imaging device 100, imaging device 200, imaging device 400 and imaging device 500 described herein.

In the method of operating an imaging device, a probe device comprising an internal channel extending through the probe device and comprising an outlet aperture is arranged (step T1), wherein the probe device is configured for providing a fluid probe as a fluid jet or a fluid suction stream at the outlet aperture. Providing a fluid probe is controlled with a micro fluidic pressure controller (step T2). In particular, the micro fluidic pressure controller can control a pressure difference at the outlet aperture and thereby also the direction of the fluid probe resulting in either a fluid jet or in a fluid suction stream. When the fluid probe impinges on a sample or attracts a sample, an interaction between the fluid probe provided at the outlet aperture of the probe device and a sample occurs. This interaction between the fluid probe and the sample is detected with an interaction sensor (step T3). The interaction sensor provides a sensor readout out that is indicative of the interaction between the fluid probe and the sample. It is then possible to use a surface topography determination unit for determining a surface topography of the sample using the sensor readout, e.g., based on the detected interaction between the fluid probe and a sample (step T4).

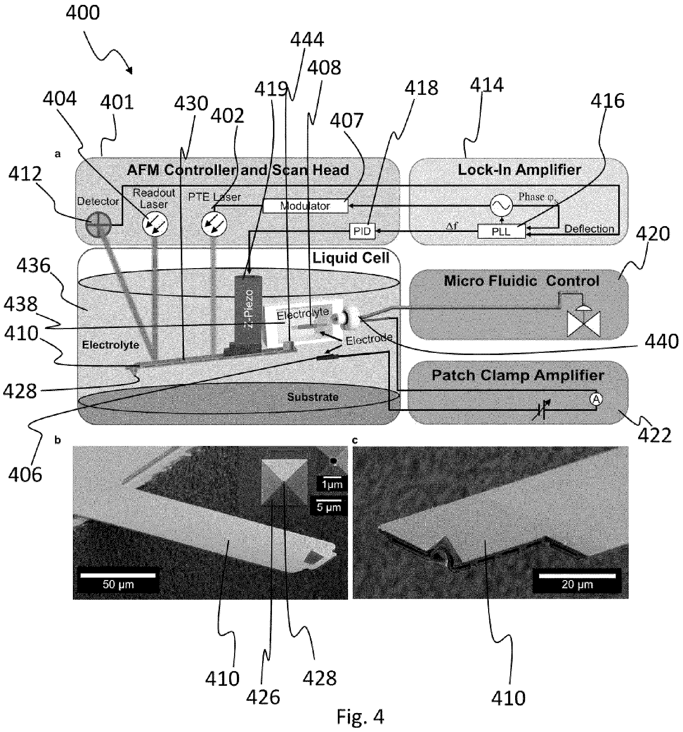

Fig. 4a schematically and exemplary shows imaging device 400 that comprises an AFM controller and scan head 401. The AFM controller and scan head 401 comprises a photothermal excitation laser 402, and a readout laser 404. The readout laser 404 is arranged and configured for determining the deflection of a probe device 410 that, here, is exemplary configured as a micro-channelled cantilever probe and that is deflected by an optical lever method. A readout signal of the readout laser 404 may be detected with a photodiode 412.

A frequency of the photothermal excitation laser 402 may be modulated with a modulator 407. That is, a deflection-readout of a photodiode 412 may be used as an input signal for an external lock-in amplifier 414 whose output may be used to modulate the photothermal excitation laser 402. Its excitation frequency can be controlled by a PLL 416 tracking the cantilever probe's resonance, which may provide the signal for PID-feedback 418 of the imaging device 400 and may control z-piezo movement 419.

The imaging device 400 has a micro fluidic pressure controller 420 and a patch-clamp amplifier 422 to integrate fluidic force microscopy and SICM, respectively. For performing SICM, the imaging device 400 is equipped with electrodes 406, 408. For the implementation of SICM, Ag/AgCl-electrodes 406, 408 are placed in both, a fluid environment 436 and a fluid reservoir 438 of the probe device 410, respectively. The fluid environment 436 is also configured for accommodating a sample. The micro fluidic pressure controller 420 is mechanically stable and leak-proof connected to the fluid environment 436 using a micro fluidic connector 440. With the micro fluidic pressure controller 420, it is possible to control a pressure difference in the internal channel 430 of the probe device 410. The imaging device 400 can be operated to provide a fluid probe ejecting from an outlet aperture 428 of the probe device 410 as a fluid jet. However, it is also possible to operate the imaging device 400 such that a fluid is sucked into the outlet aperture 428 as a fluid suction stream. Whether a fluid jet or a fluid suction stream is used as the fluid probe can be controlled by the micro fluidic pressure controller 420 that is fluid connected to the internal channel 430 of the probe device 410 via the fluid reservoir 438. In particular, the fluid reservoir 438 is connected to the internal channel 430 by means of an inlet aperture 444 arranged at the opposite end of the internal channel 430 in comparison to the outlet aperture 428.

Fig. 4b shows scanning electron microscopy (SEM) images of a probe device 410 in form of a micro-channelled cantilever probe of the imaging device 400. The probe device 410 has a pyramidal tip 426 with an outlet aperture 428 having a diameter of 300 nm at their apex (cf. Fig. 4b, insets) and an internal channel 430, which is supported by a pillar structure (cf. Fig. 4c).

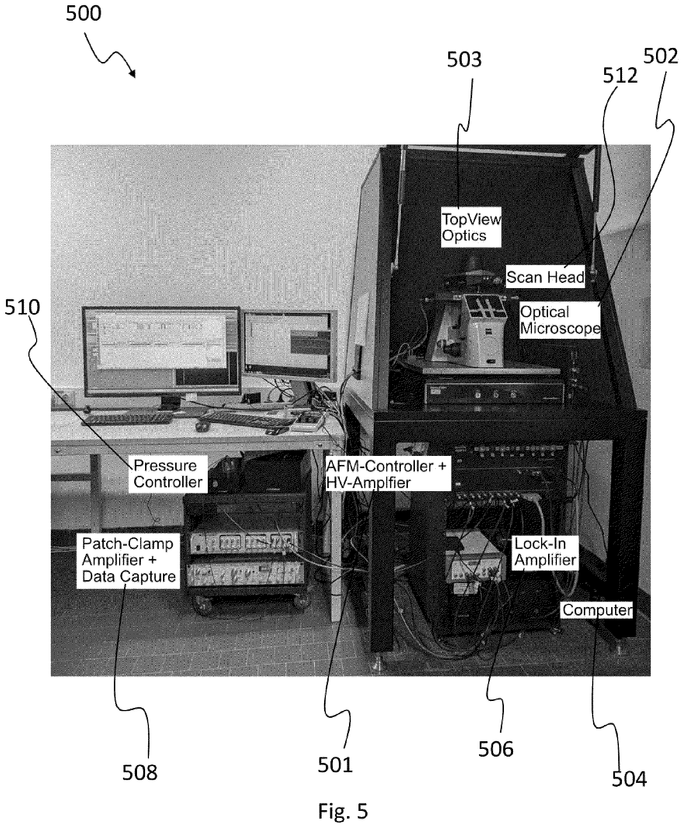

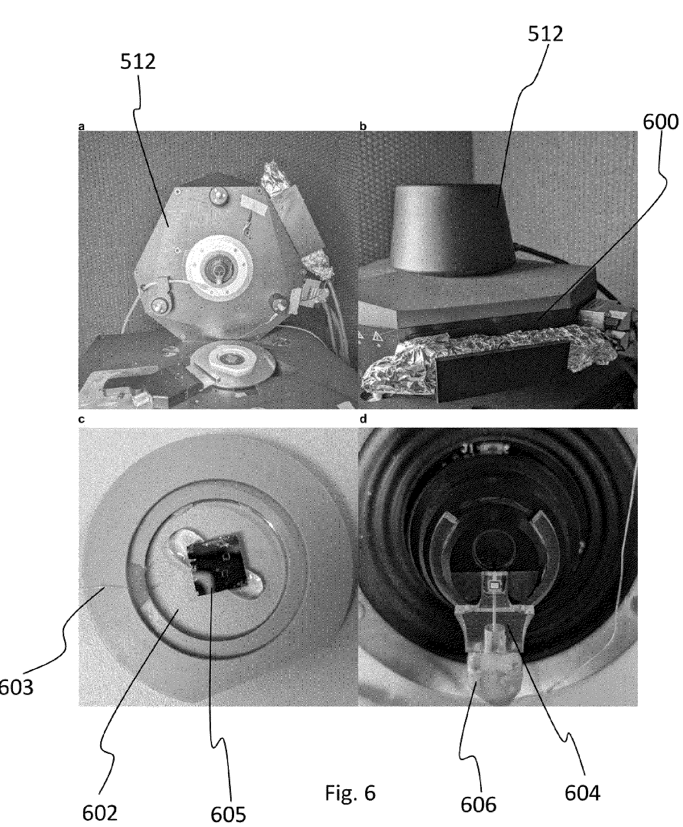

Fig. 5 shows a photograph of an imaging device 500 that is configured in accordance with the imaging device 400 described with reference to Fig. 4. The imaging device 500 is based on an AFM-Controller and a high-voltage (HV)-Amplifier 501 with top view optics 503, which was placed in an acoustic shielding. The imaging device 500 comprises an inverted optical microscope 502 (not used for the described experiments) resting on a vibration isolation system. The main controller electronics 504 has been combined with an additional lock-in amplifier 506 for the PLL, whose signal can be fed back to the controller electronics 504. Furthermore, there is a patch-clamp amplifier 508 for SICM and the external pressure controller 510 for fluidic force microscopy. The imaging device 500 has an AFM-head 512 that is discussed in more detail with reference to Fig. 6.

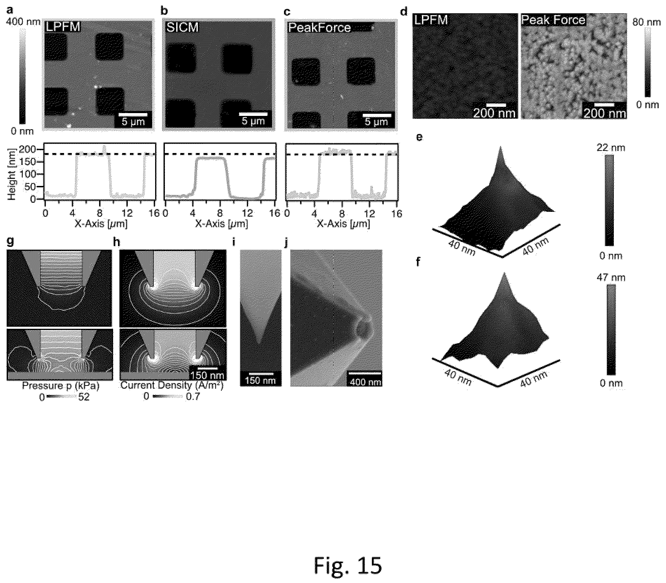

Fig. 6 shows a detailed view of the AFM-head 512 and other components of the imaging device 500. Fig. 6a shows a close-up of the additional wiring and tubing used to combine fluidic force microscopy and SICM with the scan-head 512 of the imaging device 500. Fig. 6b shows a positioning of a pre-amplifier 600 and the additional, grounded shielding for SICM. Fig. 6c shows a fluid-cell 602 used for the experiments described in the following in particular with respect to Figs. 15 to 20. A wire 603 for an additional SICM electrode is visible on the upper left corner. The sample 605 shown is template stripped Au-surface. Fig. 6d shows a close-up of a micro-channelled cantilever probe mounted on the Poly (methyl methacrylate)(PMMA)-holder 604. The cantilever probe with the internal channel (middle) and the fluid reservoir with a connector 606 for the external tubing (bottom) are visible.

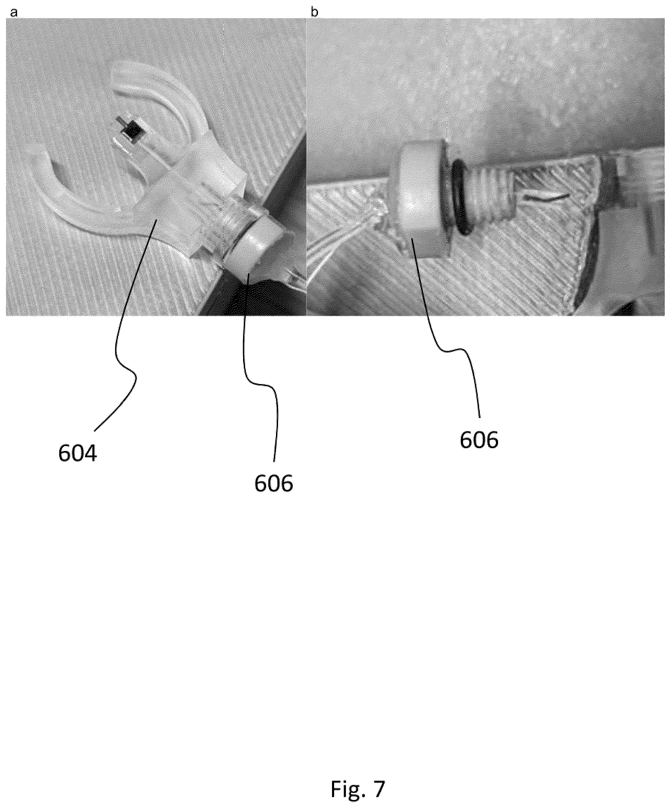

In order to create a mechanically stable and leak-proof connection, the micro fluidic connector 606 was modified as depicted in Fig. 7. Thereby, special care was taken to reduce stray capacitances and leakage currents. The micro-channelled cantilever probes are nanopipettes that were pre-mounted on PMMA-holders 604. The connector 606 to this holder 604 has been modified by preparing an M3-thread and using M3 connectors that incorporated a tubing for connecting to a micro fluidic pressure controller such as micro fluidic pressure controller 420 and an electrode such as one of electrodes 406, 408, respectively. Fig. 7a shows an overview of the modified PMMA-holder 604. Fig. 7b shows a detailed view of the connector 606 with a M3-thread and an O-ring.

### Measurement Principle: impinging Liquid Jet near a Solid Surface

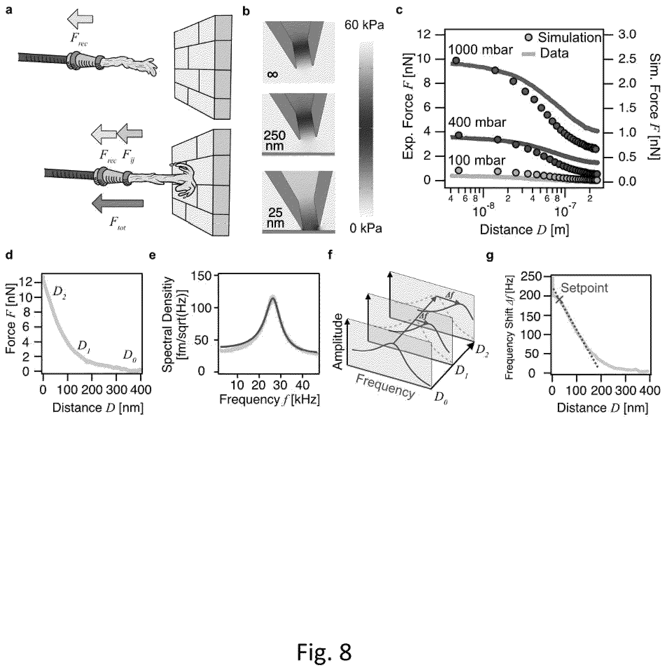

The ejection of mass by a fluid probe such as a liquid jet or a fluid suction stream is associated with a recoil force F_{rec} due to Newton's third law of motion. The principle is known from rocket propulsion (cf. Fig. 8a, upper image) and is also valid for micro-channelled probe devices, when an external pressure is applied. The resulting recoil force F_{rec} may depend linearly on the externally applied pressure but may be independent of the presence of a surface. However, by approaching a surface, an additional force component may be observed. This phenomenon of an additional force due to an impinging jet may also be observed macroscopically and may be attributed to the momentum transfer according to Newton's second law (cf. Fig. 8a, lower image) and the resulting force Fᵢⱼ may depend on the distance to the wall.

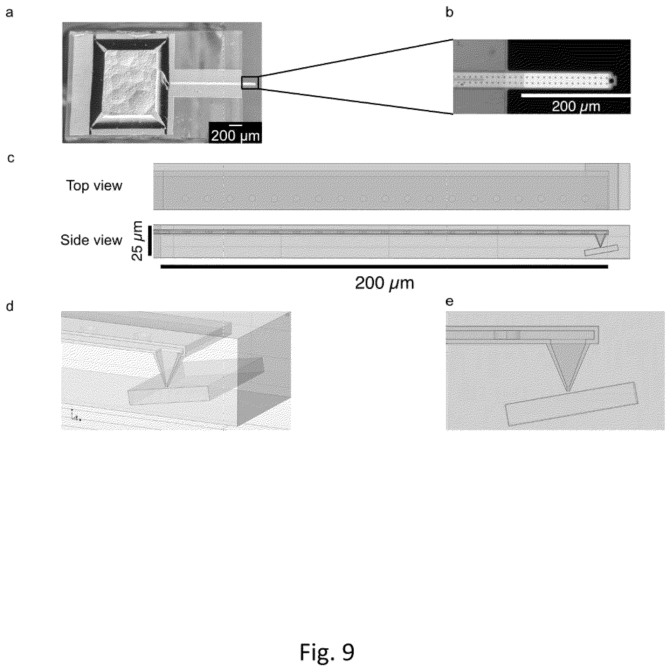

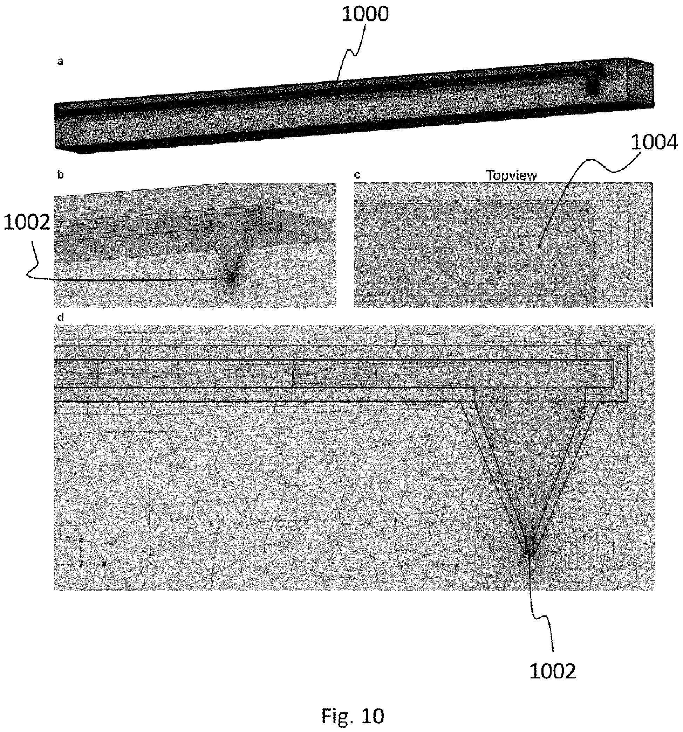

Fig. 8b (top graph) illustrates the pressure distribution over the micro-channel of a probe device placed far away from a solid surface as calculated for an applied pressure (pₑₓₜ= +1000 mbar). To couple the laminar flow in the internal channel with the resulting mechanical deflection of the probe device, a detailed model of a micro-channelled probe device has been implemented (cf. Fig. 9 and 10).

In particular, Fig. 9 shows a model of micro-channelled probe device for conducting simulations. Fig. 9a shows a light microscopy image of the probe device. Figs. 9b and 9c show a geometric model of the probe device as top- Fig. 9b and side- Fig. 9c view. The columns, which may contribute to the machine stability of the internal channel may also be taken into account for the simulations. Figs. 9d and 9e show that the angle of the substrate can be included to model the tilt of the cantilever probe due to the optical-lever detection technique.

Fig. 10 shows a visualization of a mesh-grid utilized for determining a liquid flow through micro-channelled probe device when it is placed far away from a surface. Fig. 10a shows a 3D representation of a total simulation space 1000. Fig. 10b shows a close-up of the mesh near the tip with the outlet aperture 1002. Fig. 10c shows that the columns in the internal channel 1004 may only have a limited influence on the flow profile. Fig. 10d shows a cross-section of the tip and the outlet aperture 1002.

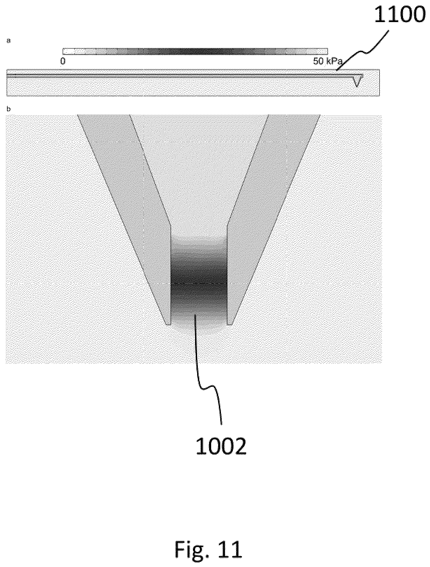

The pressure drop over an internal channel may often be neglected in comparison to the one taking place at the outlet aperture 1002 (cf. Fig. 11). In particular, Fig. 11 shows pressure profiles for a micro-channelled probe device 1100. Fig. 11a shows a pressure profile across the channel as determined by the mesh shown in Fig. 10. Here, the pressure drops according to Bernoulli's law. Fig. 11b shows a pressure distribution at the outlet aperture 1002 with the same LUT (look-up-table) as in the Fig. 11a. The pressure drop at the aperture may be the dominant pressure drop compared to the one over the internal channel.

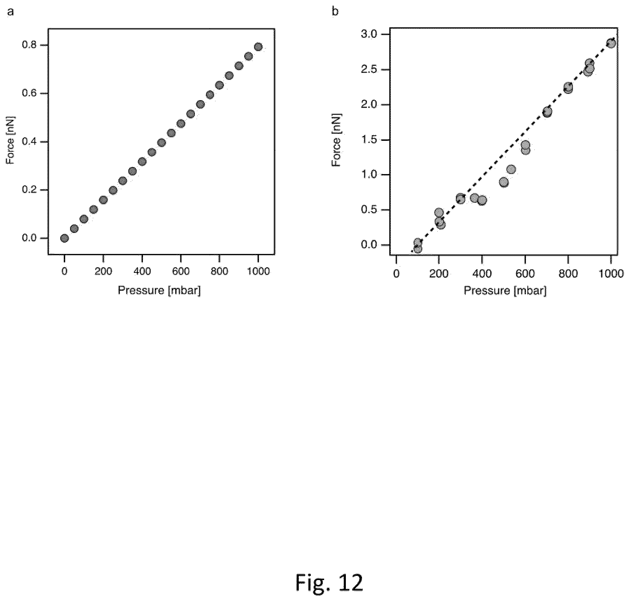

Due to the non-linear increase of the hydrodynamic resistance with decreasing outlet aperture diameter d, this effect may be more pronounced for small apertures. The probe device deflection due to F_{rec} may only be in the order of a few nanometres. The linear dependence of F_{rec} versus Δp has been reproduced here experimentally and via simulations for small apertures (d ≈ 300 nm) (cf. Fig. 12). In particular, Fig. 12 shows a verification of the linear dependence of the recoil force on external pressure for small apertures. Fig. 12a shows a Comsol multiphysics simulation. Fig. 12b shows experimental data acquired under analogous conditions as the simulations. The linear response observed for larger apertures (e.g. d ≥ 2 µ) have been observed also for comparatively small apertures (d ≈ 300 nm).

Returning to Fig. 8b (bottom), here, it is illustrated what may happen when the outlet aperture approaches a solid surface while liquid is ejected. The simulated pressure distributions in the gap between a sample surface and the probe device's outlet aperture are shown for three positions: infinite separation, D=250 nm, and D=25 nm, respectively. With decreasing distance, an increased pressure within the gap between outlet aperture and surface may build up. This pressure may cause a repulsive force component Fᵢⱼ(D), whose gradient may be the foundation of the distance regulation in LPFM. The total force Fₜₒₜ(D)=F_{rec}+Fᵢⱼ(D) has been determined experimentally as well as by multiphysics simulations. Fig. 8c summarizes a set of simulations for three different values of applied pressures pₑₓₜ and separations D ranging from 250 nm down to 5 nm (open data points). Experimental data for Fₜₒₜ have been acquired as quasi-static F(D)-curves at constant pₑₓₜ. (cf. solid lines in Fig. 8c).

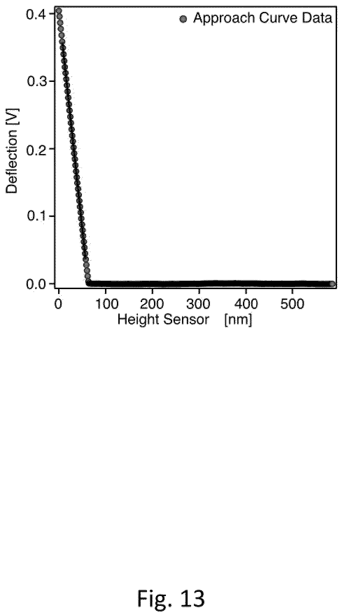

The principal shape of the force profiles Fₜₒₜ vs. D (cf. example in Fig. 8d) due to the interaction of an impinging jet with a solid surface may be comparable to the one for the interaction of a solid tip with a surface in presence of a long-ranged interaction force. Thus, the hydrodynamic interaction of the liquid jet may be utilized to implement another type of fluid microscopy-AFM. Fig. 8e shows the experimental resonance curve for a micro-channelled probe device positioned far away from the surface (D₀→∞) and pₑₓₜ=+1000 mbar. This curve shows a typical Lorentzian shape for a driven harmonic oscillator with resonance frequency fN(D₀) and corresponding phase shift φN(D₀) of 90° at fN(D₀). Upon approach of the cantilever probe to the surface (D₀ > D₁ > D₂), the resonance frequencies fN(D1) and fN(D2) shift by Δf to higher frequencies as the interaction forces become increasingly repulsive. The corresponding frequency shift Δf(D) of a micro-channelled probe device driven by photothermal excitation has been determined experimentally and is shown in Fig. 8g. For this measurement, the probe device was oscillating with small amplitudes of 5 nm (cf. Fig. 13). The steepest slope for Δf(D) is observed at separations in the interval of D=25 nm to 50 nm, which provided a preferred regime for stable fluid microscopy-feedback.

Fig. 13 shows a calibration curve for a determination of an optical lever sensitivity. The LPFM-technique is based on fluid force microscopy. The determination of oscillation amplitude has been based on the determination of the inverse optical lever sensitivity (InvOLS), which was falling commonly in the range of 125 nm/V to 175 nm/V (for this example, InvOLS = 155.14 nm/V). Thus, for a typical free amplitude of 50 mV, the amplitude would correspond to 6.25-8.75 nm.

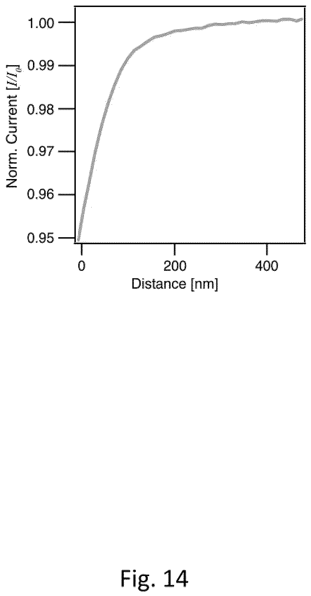

Operating at separation distances of 25 nm to 50 nm, LPFM can be considered a non-contact technique. However, it may be based on a hydrodynamic force Fᵢⱼ due to the interaction of the fluid probe with a surface rather than on the surface forces acting between two solids as for common AFM imaging techniques. Another non-contact technique in liquids is SICM that can be used together with LPFM. Also, SICM is not based on surface forces but on an ionic current passing through a micropipette or microchannel. Thus, by using the same probe device for SICM as for LPFM, both imaging modes can be used together. In SICM, the current I(D) may be normalized to the bulk current. The latter has been measured at very large separation distances. In vicinity of the surface, ion transport may become limited, and the current may diminish rapidly (cf. Fig. 14). Typical values for the feedback set point in SICM are 95 % to 99 % of the normalized current I₀.

Fig. 14 shows a distance dependence of SICM current. The current I through the outlet aperture has been determined as function of the separation distance D from a glass surface. The current of I₀, for the ionic conductivity in the bulk, has been measured while the micro-channelled probe device, here a cantilever probe with a cantilever, has been positioned far away from the surface. Zero separation was derived from the onset of the constant compliance region in the corresponding force vs. distance curve.

### Imaging of a calibration grid

LPFM has been compared to two other imaging modes operating in liquid, namely SICM and PeakForce Tapping. The latter is a representative of the intermittent, off-resonance imaging modes. Figs. 15a to 15c compare these three modes for the same sample, specifically a calibration grid. LPFM (cf. Fig. 15a) and SICM (cf. Fig. 15b) were independently executed with the same micro-channelled cantilever probe (cf. Fig. 15j). PeakForce (cf. Fig. 15c) was performed with another, conventional AFM probe and on a different instrument (cf. Fig. 15i), respectively. In all cases, the same silicon calibration grid with 10 µm pitch size and a nominal structure height of 180 nm was used. The LPFM images were acquired at pₑₓₜ=+1000 mbar applied to the micro-channelled cantilever probe. The resonance frequency for LPFM was 25 kHz to 35 kHz in liquid. Accordingly, the excitation frequency was chosen 5 % above the peak value and the PLL was enabled to track the occurring frequency shift Δf. The set point for LPFM was adjusted to Δf=200 Hz, corresponding to a separation distance of 30 nm. For SICM, no pressure was applied and a set point of I/I₀ =0.98 was chosen. All three imaging modes resolved the main topography of the sample. LPFM and PeakForce Tapping could resolve contaminants with dimension smaller than 10 nm on the sample. In this study, LPFM did not make use of a sharp tip with a radius < 10 nm as PeakForce and was based on the same aperture as used for SICM (cf. Fig. 15j). The cross-sections corresponding to the different image modes demonstrate another finding: LPFM and PeakForce provide correct height values (178.2 ± 6.5 nm and 176.7 ± 7.1 nm, respectively).

The nearly comparable image resolution for LPFM and PeakForce on the here-studied length scale, has been corroborated by blind tip reconstructions after imaging a special sample (cf. Fig. 15d). Please notice, that for this reconstruction the liquid jet has not been described in terms of an interaction potential but as an entity that corresponds to an ultra-soft probe protruding from the aperture, which has been represented by an SEM-image in Fig. 15j. For comparison, an SEM image of a solid tip can be utilized for PeakForce imaging (cf. Fig. 15i).

### Imaging soft matter with liquid probes

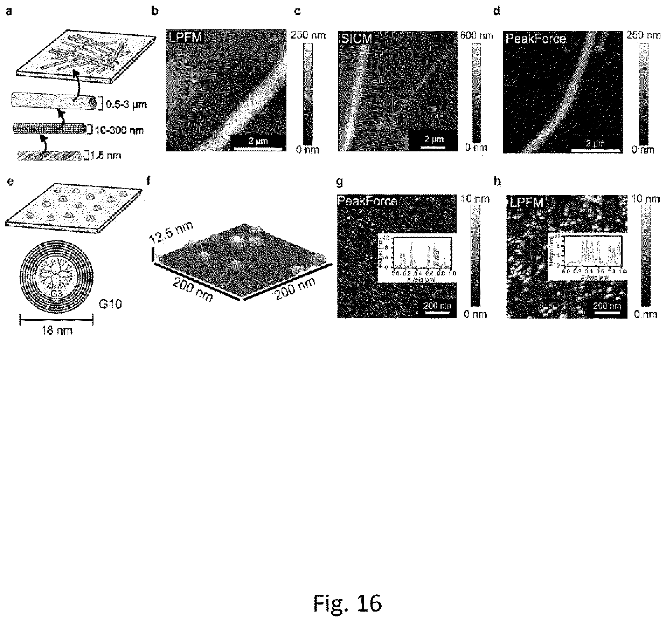

Collagen, one of the most abundant proteins in mammals with a hierarchical structure, has often been studied by AFM and SICM (cf. Fig. 16a). The here-utilized collagen fibres have diameters of approximately 1 µm and mostly do not show the characteristic segmental domain structure (D-bands) of smaller collagen fibrils when imaged in liquid. Fig. 16b to 16d show images acquired by LPFM, SICM, and PeakForce on adsorbed collagen fibres in phosphate buffered saline (PBS). LPFM- and SICM-images have been acquired again consecutively with the same micro-channelled cantilever probe, but on different positions of the collagen sample. For the moderately soft collagen fibrils with an elastic modulus of about 2 MPa, PeakForce Tapping and LPFM show superior resolution.

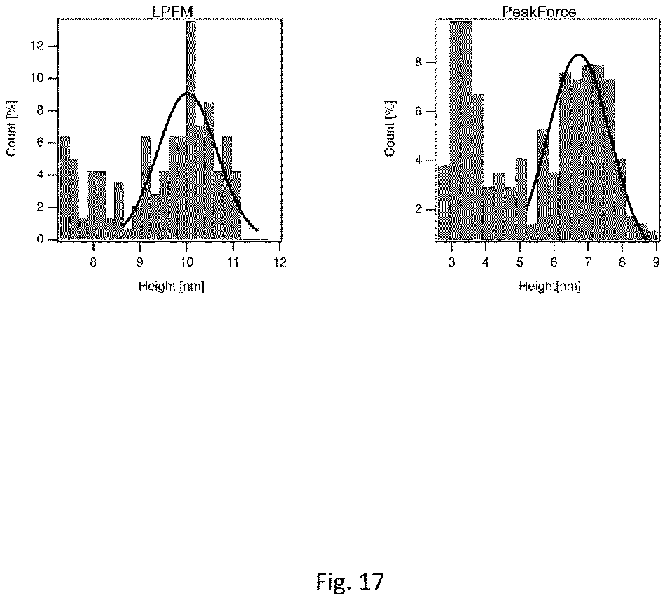

Despite the relatively large aperture diameter of the micro-channelled cantilever probes, LPFM can resolve much smaller macromolecules. Poly(amidoamine) (PAMAM) dendrimers of generation G10 are highly monodisperse and feature a spherical shape with a diameter of 18.3 nm in solution. Fig. 16f corroborates this finding by PeakForce Tapping in liquid for the samples used here, namely PAMAM G10 adsorbed to mica. Figs. 16g and 16h compare images acquired by LPFM and PeakForce for adsorbed PAMAM G10. Tip convolution effects are present for both imaging modes. On the other hand, the dendrimers appeared to be significantly higher (8.7 ± 2.2 nm, n>100) in the LPFM images than in the PeakForce (6.1 ± 2.1 nm, n>100) images (cf. insets Figs. 16g, 16h and Fig. 17). Thus, LPFM can be considered in this case a 'gentler' imaging mode for soft structures.

In particular, Fig. 17 shows a height distribution for PAMAM dendrimers adsorbed onto mica. The bimodal distribution has been reported also before and can be attributed to defects for the high generation dendrimers. Fig. 17a shows a height distribution as obtained by LFPM (n=140). Fig. 17b shows a height distribution as obtained by PeakForce Tapping (n=340).

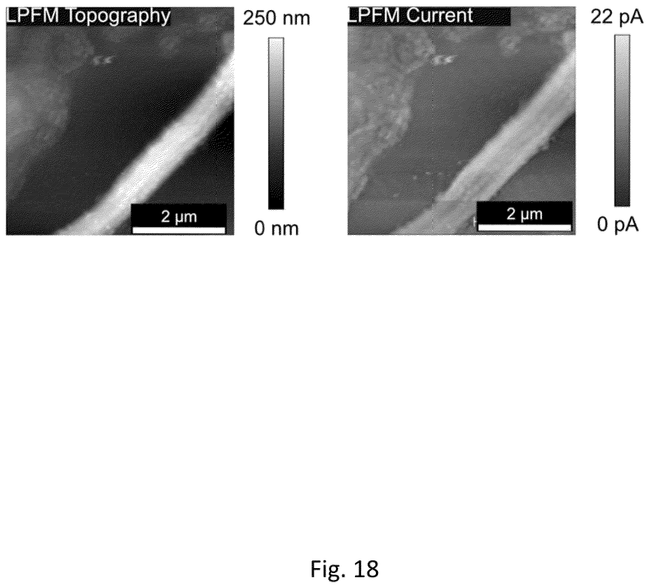

Fig. 18 shows a simultaneous acquisition of ionic current and topography in LPFM. The topographic image has been acquired in the LPFGM mode while at the same time ion current through the aperture has been determined.

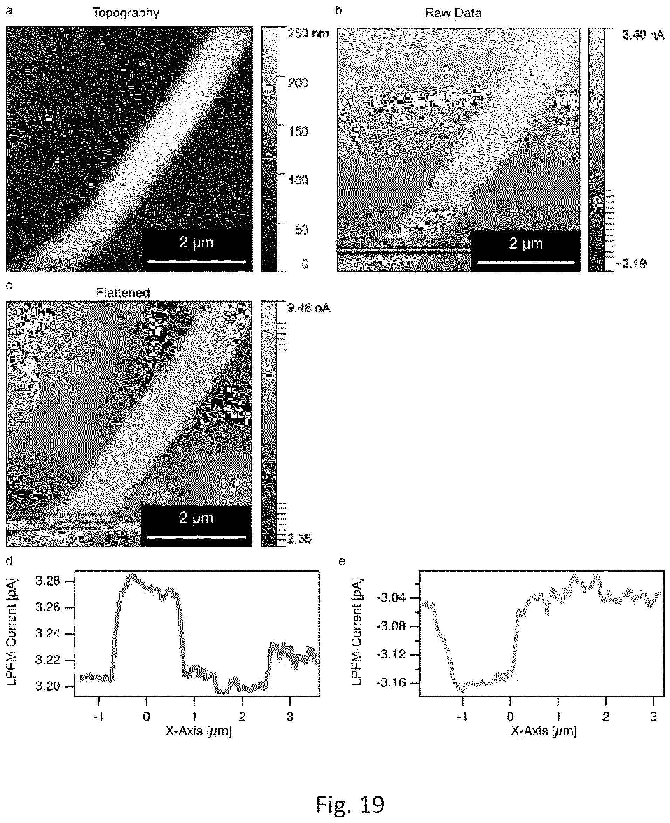

Fig. 19 shows a current signal in LPFM upon reversal of applied potential. Fig. 19a shows a topographic signal as acquired by LPFM. Fig. 19b shows a current signal acquired simultaneously to the topography. The externally applied potential has been reversed during the scan. The solid lines indicate the positions of the cross-sections for positive (violet) and negative potentials (orange). Fig. 19c shows the same current image as Fig. 19b but flattened for each fast scan line. Figs. 19d and 19e show cross sections for the two different applied potentials.

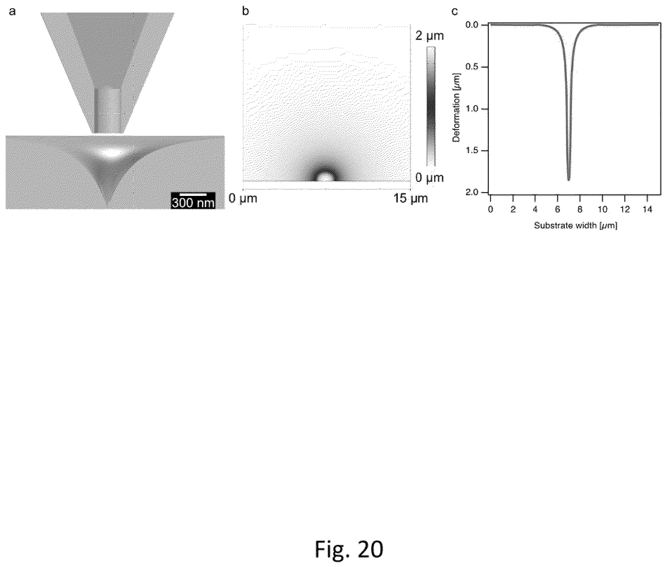

Fig. 20 shows a deformation of a soft surface due to the impinging jet. Fig. 20a shows an overview of the simulation geometry for the interaction of an impinging jet with a soft deformable surface with an elastic modulus of E= 10 kPa (pₑₓₜ=1000 mbar, D= 5nm). Below, the 3D deformation of the substrate is shown in side-view. Fig. 20b shows a top view of the substrate deformation where the colour gradient from yellow (high deformation) over red to black (no deformation) indicate the deformation as the function of the lateral position. Fig. 20c shows a cross-section of the deformation. The centre is shown as a 2D profile on the right, yet again confirming a conical shape of the pressure contribution under the tip.

To conclude, with the imaging device as described herein, it is possible to perform LPFM which is a non-contact imaging mode that is based on a probe device-sample interaction of hydrodynamic origin such as a repulsive interaction force. Thus, LPFM is decoupled from the strength of surface forces or local surface chemistry and can be utilized for various different sample types in liquid environment. The lateral resolution that can be achieved with LPFM can be significantly smaller than the outlet aperture diameter and can be comparable to the high resolution of known AFM-imaging with standard cantilever probes.

Imaging by LPFM is a gentle process which may yield for a separation of 25 nm, a maximum pressure of about 40 kPa below the outlet aperture. For comparison: a conventional AFM tip with 10 nm radius typically exerts a pressure of 300 kPa on a sample for a loading force of 0.1 nN. Hence, LPFM allows for a comparatively "soft" imaging of biological samples. Moreover, LPFM can be readily combined with other techniques specifically developed or implemented for fluidic force microscopy such as micromanipulation, cell sampling, cell injection, and patch clamping.

Finally, LFPM can be employed for fast imaging in liquids, which is often considered very important for biological processes. Contrary to off-resonant imaging techniques, which are typically restricted in their scanning frequency to a very small fraction of a cantilever probe resonance frequency, this limit does not exist or is at least reduced for LPFM. Moreover, the restriction of SICM scanning speed due to the limited bandwidth of transimpedance amplifiers due the small currents is also non-existent or at least reduced for LPFM.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the dis-closed embodiments.

In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

Procedures like controlling the provision of the fluid probe at the outlet aperture of the probe device, detecting an interaction between the fluid probe provided at the outlet aperture of the probe device and a sample, determining a surface topography of a sample based on the detected interaction between the fluid probe and a sample, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard-wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for ex-ample, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, main-frame computers, mobile telephones, PDAs, pagers, routers, switches, data centres, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention relates to an imaging device for imaging a surface topography of a sample in a fluid environment. The imaging device comprises a probe device comprising an internal channel extending through the probe device and comprising an outlet aperture, the probe device being configured and arranged for providing a fluid probe at the outlet aperture, a micro fluidic pressure controller that is configured for controlling the provision of the fluid probe at the outlet aperture of the probe device, an interaction sensor that is configured for measuring an interaction value indicative of an interaction between the fluid probe provided at the outlet aperture of the probe device and a sample, and a surface topography determination unit that is configured for determining a surface topography of the sample based on the measured interaction value.

## Claims

1. An imaging device (100; 200; 400; 500) for imaging a surface topography of a sample (116; 220; 605) in a fluid environment (112; 436), in particular with nanometre resolution, the imaging device (100; 200; 400; 500) comprising:
- a probe device (102; 202; 410) comprising an internal channel (106; 206; 430) extending through the probe device (102; 202; 410) and comprising an outlet aperture (108; 208; 428), the probe device (102; 202; 410) being configured and arranged for providing a fluid probe (110; 218) at the outlet aperture (108; 208; 428),
- a micro fluidic pressure controller (114; 210; 420) that is configured for controlling the provision of the fluid probe (110; 218) at the outlet aperture (108; 208; 428) of the probe device (102; 202; 410),
- an interaction sensor (118; 212; 419) that is configured for measuring an interaction value indicative of an interaction between the fluid probe (110; 218) provided at the outlet aperture (108; 208; 428) of the probe device (102; 202; 410) and a sample (116; 220; 605), and
- a surface topography determination unit (120; 222) that is configured for determining a surface topography of the sample (116; 220; 605) based on the measured interaction value.

2. The imaging device (100; 200; 400; 500) according to claim 1, wherein the interaction sensor (118; 212; 419) is arranged at or part of the probe device (102; 202; 410).

3. The imaging device (100; 200; 400; 500) according to claim 1, wherein the interaction sensor (118; 212; 419) is arranged at or part of a sample holder (214) that is configured for holding a sample (116; 220; 605) in a fluid environment.

4. The imaging device (100; 200; 400; 500) according to at least one of the preceding claims, wherein the probe device (102; 202; 410) is configured as a cantilever probe (102; 410) or a membrane probe (202).

5. The imaging device (100; 200; 400; 500) according to at least one of the preceding claims, comprising a raster scanning unit (401) that is configured for raster scanning an area of a sample (116; 220; 605) with the probe device (102; 202; 410).

6. The imaging device (100; 200; 400; 500) according to claim 5, wherein the raster scanning unit (401) comprises a feedback loop that is configured for receiving an interaction sensor readout representing the measured interaction value as input and for providing a distance control signal as output that is configured for controlling a distance between a sample (116; 220; 605) and the probe device (102; 202; 410) so that when raster scanning a sample (116; 220; 605), a probe device-sample force is essentially constant in average.

7. The imaging device (100; 200; 400; 500) according to at least one of the preceding claims, comprising a resonance frequency excitation device (402) that is arranged and configured for exciting a resonance frequency of the probe device (102; 202; 410).

8. The imaging device (100; 200; 400; 500) according to claim 7, wherein the resonance frequency excitation device (402) is a photothermal excitation laser.

9. The imaging device (100; 200; 400; 500) according to at least one of the preceding claims, comprising a first electrode (406) that is placed in a fluid reservoir (438) fluidly connected to an inlet aperture (444) of the internal channel (106; 206; 430) arranged at a proximal end of the probe device (102; 202; 410) and a second electrode (408) that is placed at a sample holder (214).

10. The imaging device (100; 200; 400; 500) according to at least one of the preceding claims, wherein the fluid probe (110; 218) is a liquid probe or the fluid probe (110; 218) is a gas probe.

11. A method of fabricating an imaging device (100; 200; 400; 500), the method comprising the steps of:
- providing a probe device (102; 202; 410), the probe device (102; 202; 410) comprising an internal channel (106; 206; 430) extending through the probe device (102; 202; 410) and comprising an outlet aperture (108; 208; 428), so that the probe device (102; 202; 410) is configured and arranged for providing a fluid probe (110; 218),
- providing a micro fluidic pressure controller (114; 210; 420) so that provision of the fluid probe (110; 218) at the outlet aperture (108; 208; 428) of the probe device (102; 202; 410) can be controlled with the micro fluidic pressure controller (114; 210; 420),
- providing an interaction sensor (118; 212; 419) so that an interaction value that is indicative of an interaction between the fluid probe (110; 218) provided at the outlet aperture (108; 208; 428) of the probe device (102; 202; 410) and a sample (116; 220; 605) can be measured with the interaction sensor (118; 212; 419), and
- providing a surface topography determination unit (120; 222) so that a surface topography of a sample (116; 220; 605) can be determined based on the measured interaction value with the surface topography determination unit (120; 222).

12. A method of operating an imaging device (100; 200; 400; 500), the method comprising the steps of:
- arranging a probe device (102; 202; 410) comprising an internal channel (106; 206; 430) extending through the probe device (102; 202; 410) and comprising an outlet aperture (108; 208; 428), the probe device (102; 202; 410) being configured for providing a fluid probe (110; 218) at the outlet aperture (108; 208; 428),
- controlling the provision of the fluid probe (110; 218) at the outlet aperture (108; 208; 428) of the probe device (102; 202; 410) with a micro fluidic pressure controller (114; 210; 420),
- measuring an interaction value indicative of an interaction between the fluid probe (110; 218) provided at the outlet aperture (108; 208; 428) of the probe device (102; 202; 410) and a sample (116; 220; 605) with an interaction sensor (118; 212; 419), and
- determining a surface topography of a sample (116; 220; 605) based on the measured interaction value using a surface topography determination unit (120; 222).

13. A method of maintenance of an imaging device (100; 200; 400; 500), the method comprising repairing or replacing one or more of:
- a probe device (102; 202; 410) comprising an internal channel (106; 206; 430) extending through the probe device (102; 202; 410) and comprising an outlet aperture (108; 208; 428), the probe device (102; 202; 410) being configured and arranged for providing a fluid probe (110; 218) at the outlet aperture (108; 208; 428),
- a micro fluidic pressure controller (114; 210; 420) that is configured for controlling the pro-vision of the fluid probe (110; 218) at the outlet aperture (108; 208; 428) of the probe device (102; 202; 410),
- an interaction sensor (118; 212; 419) that is configured for measuring an interaction value indicative of an interaction between the fluid probe (110; 218) provided at the outlet aperture (108; 208; 428) of the probe device (102; 202; 410) and a sample (116; 220; 605), and
- a surface topography determination unit (120; 222) that is configured for determining a surface topography of the sample (116; 220; 605) based on the measured interaction value.

14. A computer program for operating an imaging device (100; 200; 400; 500), the computer program including instructions for executing the steps of the method of claim 12, when run on a processor.

15. A non-transitory computer readable data medium storing the computer program of claim 14.
